# EUROPEAN PATENT SPECIFICATION

(11) **EP 2 506 410 B1**
(45) Date of publication and mention of the grant of the patent: **24.05.2017**
(21) Application number: 12160915.0
(22) Date of filing: 23.03.2012
(51) Int. Cl.: H02M 1/42

(54) **Switching mode power supply system with power factor correction**
Schaltnetzteilsystem mit Leistungsfaktorkorrektur
Système d'alimentation à mode de commutation avec correction du facteur de puissance

(30) Priority: 01.04.2011 TR 201103185
(43) Date of publication of application: 03.10.2012
(73) Proprietor: Vestel Elektronik Sanayi ve Ticaret A.S., 45030 Manisa (TR)
(72) Inventor: Yildirim, Omer, 45030 Manisa (TR)
(74) Representative: Cayli, Hülya

(56) References cited:
- EP-A2- 1 492 219
- DE-A1- 19 531 758
- US-A1- 2005 035 661
- US-A1- 2008 218 503

## Description

### Technical Field

The present invention is related to the switching mode power supplies with active power factor correction.

### Prior Art

Switching mode power supplies use high frequency switching to step down or step up the output voltage or output current. The primary side of a high frequency transformer is driven preferably with a square wave of high frequency (10 KHz - 1 MHz) and a similar waveform is obtained at the secondary side in terms of voltage. The voltage is then rectified and a direct current output is obtained.

Switching mode supplies decrease the power factor of the input side because of their switching nature. The power factor of the input side, which is generally the mains input, degrades the quality of the network by introducing harmonics and loading network with inductive loads. Since almost all appliances use switching supplies, power factor correction is a must for all devices with considerable power output.

There are mainly two types of power correction systems known in the prior art for switching supplies which are active correction and passive correction. Passive power factor correction systems employ high order passive inductor capacitor filters to correct the input power factor of the supply. Passive power factor correction systems are inadequate in most of the cases since the power factor varies with time and it is not possible to change the correction amount using the passive correction systems.

The active power factor correction systems generally employ a control circuit which is generally a power factor correction integrated circuit. Power correction integrated circuits measure the power factor at the input side, and control a switching element to correct the power factor of the supply. Recently developed integrated circuits can be utilized for both the output control of the power supply and power factor correction. In other words, the single integrated circuit controls a switching element, which drives the high frequency transformer, by measuring both the output voltage of the supply and the power factor of the input. This reduces the number of components required.

However, each power supply has its own characteristics in terms of power factor contribution, in accordance with their input output relations, control systems and power input. Hence a separate power factor correction is required for every supply which exists in a system.

For instance, a display system generally employs two power supplies. The first power supply has high voltage high power (12 Volts and 24 Volts outputs and approximately 200 Watts output power) outputs and the second power supply has lower voltage and lower power (5 Volts and 3.3 Volts outputs and approximately 20 Watts output power). For these systems, the first power supply remains on when the device is in an active mode. However, the secondary power supply is always on as long as the power input is fed to the device. This is because the secondary supply feeds the stand by circuits, which are used to wake the device to an active mode.

Since the two supplies require power factor correction, several approaches is used to obtain good power factor correction. It is possible to use active power factor correction for each supply. However, for a low power supply, it is an expensive solution to employ power factor correction integrated circuits for it. For this reason, manufacturers generally employ a simple passive power factor correction circuit for secondary supply, a choke for instance, to correct the power factor. However, this solution is also an expensive and space consuming since the choke has a separate core, which is sizable to the secondary supply transformer. Especially for slim televisions, the existence of big components in the power supply brings in design considerations.

A power supply system is disclosed in the patent document CN 101742186 A in which an additional active power factor correction circuit is employed. However, external correction circuits also require big components and bring in additional cost to the system. Hence external power factor correction circuits are not preferred for slim supply designs.

The system disclosed in US 2010/0176656 uses a power supply with power factor correction for backlight of a display and a second power supply with no power factor correction for the other components of the display. It is acknowledged that the power factor degradation mainly stems from the backlight since it draws a considerable percentage of the total power. However recent display systems also employ high power class-D amplifiers and fast thin film displays which also require considerable power. Hence power factor correction is needed for almost all components of the display.

Patent document DE19531758A1 discloses a voltage converter system which comprises two transformers, a rectifier, a smoothing inductor, a power switch, two transfer switches, two diodes, a monitoring unit, a smoothing capacitor and a control unit. Each transformer has a demagnetising auxiliary winding with respect to the primary windings, connected in series with another diode. In the system, the single control unit provides a pulse of adjustable width for the power switch and the DC voltage across the smoothing capacitor is measured by the monitoring unit and fed back through an opto-coupler to the control unit.

Consequently a power factor correction for these power supply systems is required.

### Brief Description of the Invention

Present invention discloses a switching power supply system which comprises; a first power supply comprising; a first transformer for stepping up and/or down an output voltage of the first power supply; a first switching means connected to said first transformer for driving said first transformer; a first controlling means with power factor correction connected to said first switching means for controlling the switching operation of the switching means; at least one second power supply comprising; a second transformer for stepping up and/or down output voltage of the second power supply; a second switching means connected to said second transformer for driving said second transformer; a second controlling means connected to said second switching means for controlling the switching operation of the switching means; wherein said power supply system further comprises; at least one auxiliary winding on the first transformer for generating a higher voltage than an input voltage of a power input of the power supply system; a first rectification means connected between the power input of the power supply system and a power input of the second power supply, allowing a first current to only pass from the power input of the power supply system to the power input of the second power supply and a second rectification means connected between an output of the auxiliary winding and the power input of the second power supply, allowing a second current to pass only from the output of the auxiliary winding to the power input of the second power supply.

Within the system of the invention, it is possible to obtain active power factor correction using a single power factor correction integrated circuit for multiple power supplies in the system. Hence the need to use multiple power factor correction circuit is eliminated which decreases the cost of the system and the space required for the system.

### Object of the Invention

The object of the invention is to provide a power supply system with power factor correction comprising multiple power supplies.

Another object of the invention is to provide a power supply system with power factor correction wherein a single power factor correction circuit is used for multiple power supplies.

Another object of the invention is to provide a power supply system with power factor correction requiring smaller space compared to the systems known from the prior art.

### Description of the Drawings

**Figure 1** shows a power supply system known in the prior art
**Figure 2** shows another power supply system known in the prior art
**Figure 3** shows the power supply system of the present invention

The reference numbers as used in figures may possess the following meanings;

| | |
|---|---|
| First power supply | (S1) |
| Second power supply | (S2) |
| First transformer | (T1) |
| Auxiliary winding | (T1a) |
| Second transformer | (T2) |
| Input filter means | (1) |
| Input rectification means | (2) |
| First controlling means with power factor correction | (3) |
| First switching means | (4) |
| Second controlling means with power factor correction | (5) |
| Second controlling means without power factor correction | (5') |
| Second switching means | (6) |
| Passive power factor correction means | (7) |
| First rectification means | (8a) |
| Second rectification means | (8b) |

### Detailed Description of the Invention

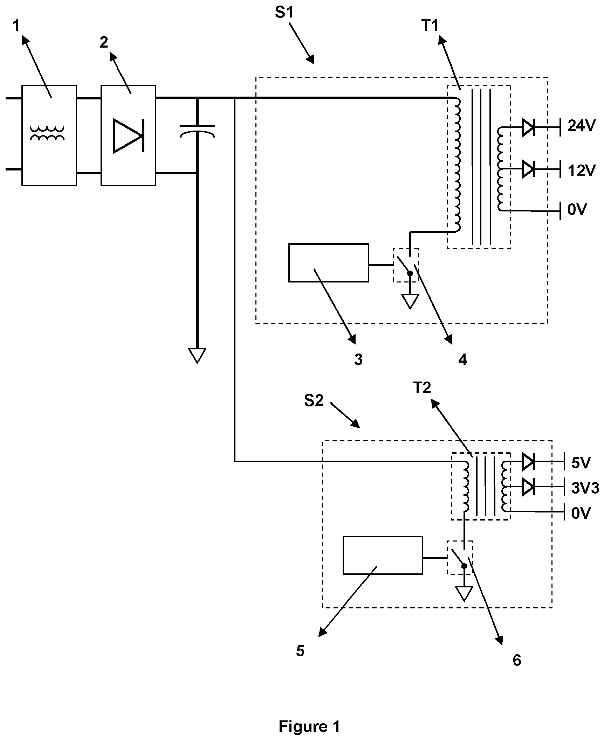

The power supply systems comprising at least two independently controlled power supplies known from the prior art are given in the figures 1 - 2. These power supply systems are mainly used within the devices with stand by capabilities wherein a first power supply (S1) is on when the device is an active mode and a second power supply (S2) is on when the device is both in active mode and in stand by mode.

The power supply systems both known from the prior art and developed by the present invention mainly comprise;
- A first power supply (S1) comprising;
   o A first transformer (T1) for stepping up and/or down output voltage of the power supply (S1);
   o A first switching means (4) connected to said first transformer (T1) for driving said first transformer (T1);
   ∘ A first controlling means with power factor correction (3) connected to the switching means (4) for controlling the switching operation of the switching means (4)
- A second power supply (S2) comprising
   ∘ A second transformer (T2) for stepping up and/or down output voltage of the power supply (S2);
   ∘ A second switching means (6) connected to said second transformer (T2) for driving said first transformer (T2);
   o A second controlling means (5 or 5') connected to the switching means (6) for controlling the switching operation of the switching means (4)
- Preferably an input filtering means (1) for filtering an input current of the system and/or an input rectification means (2) for rectifying the input current of the system.

The first power supply system given in figure 1, which is known from the prior art, employs a controlling means with power factor correction (5) in the second power supply (S2) to achieve active power factor correction. Since the first supply (S1) and the second supply (S2) have different characteristics and must be controlled independently, separate controlling means (3, 5) are required to control the operation of the power supplies (S1, S2). However, the utilization of second controlling means with active power factor correction is an expensive solution.

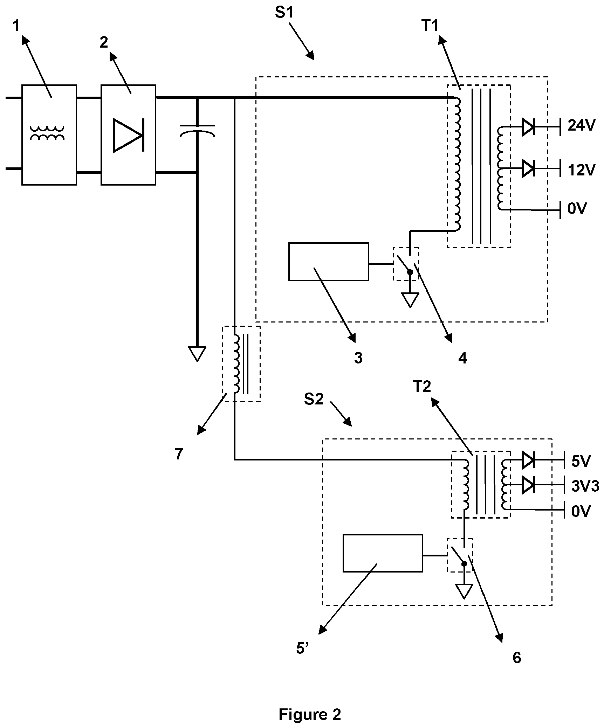

A second power supply system given in figure 2, which is also known from the prior art, employs a passive power factor correction means (7), which is generally a passive filter of first or second order, and comprises a controlling means without power factor correction (5') in the second power supply (S2). The stated power supply system employs a passive power factor correction for the second power supply (S2) and eliminates the need to a second controlling means with power factor correction (5). However, the passive power factor correction means (7) should be a significantly large component compared to the other components of the second power supply (S2). Hence stated solution cannot be preferred in slim power supply systems.

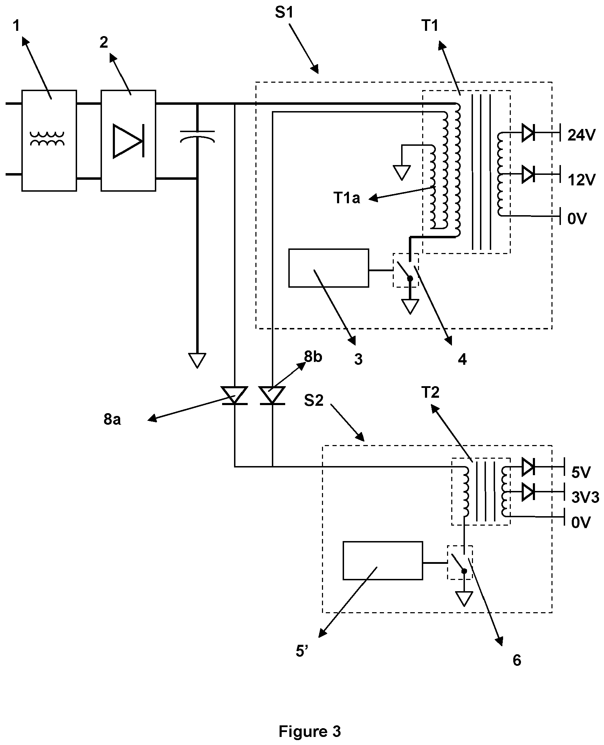

The preferred embodiment of the power supply system of the present invention is given in figure 3. The power supply system of the present invention comprises;
- An auxiliary winding (T1a) comprised by the first transformer (T1) for generating a higher voltage than the input voltage of the power supply system
- A first rectification means (8a) connected between a power input of the power supply system and a power input of the second power supply (S2), allowing current to only pass from the power input of the power supply system to the power input of the second power supply (S2)
- A second rectification means (8b) connected between an output of the auxiliary winding (T1 a) and the power input of the second power supply (S2), allowing current to pass only from the output of the auxiliary winding (T1 a) to the power input of the second power supply (S2).

The power supply of the present invention employs the power factor correction capability of the first power supply (S1) also to correct the power factor of the second power supply (S2). When the first power supply (S1) is in operation, a voltage is induced also on the auxiliary winding (T1 a). Since the induced voltage is greater than the voltage of the power input of the power supply system, the first rectification means (8a) is in OFF state and the second rectification means (8b) is ON state. The power to the second power supply (S2) is fed from the auxiliary winding (T1 a) of the first power supply (S1) power factor of which is corrected by its controlling means with power factor correction (3). Consequently the power factor of the second power supply (S2) is also corrected by the first power supply (S1).

When the first power supply (S1) is not in operation, a voltage is not induced over the auxiliary winding (T1a). Then the first rectification means (8a) is in ON state and the second rectification means (8b) is in OFF state and the power to the second power supply (S2) is supplied from the power input of the power supply system. In this case, the power factor of the second power supply (S2) is not corrected as long as the supply (S2) does not comprise a controlling means with power factor correction (5). However, the state in which the first power supply (S1) is not in operation exists when the device using the power supply system is in stand by mode. In stand by mode, the power drawn from the mains is on the order of millwatts or microwatts. Hence, the power factor correction is not needed because of very low power consumption.

The number of power supplies connected to the auxiliary winding (T1 a) can be increased as long as the power capacity of the auxiliary winding (T1a) first power supply (S1) is enough to feed the power supplies connected to the auxiliary winding (T1a). It is possible to employ several auxiliary windings (T1 a) to modify the capacity of the winding (T1 a).

Within the teachings of the present invention, it is possible for power supply systems comprising several power supplies, to obtain power factor correction for all of the power supplies using a single power factor correction circuit. Hence the cost of the system is reduced and the space requirement due to passive correction circuits is eliminated.

## Claims

1. A switching power supply system which comprises;
- a first power supply (S1) comprising;
o a first transformer (T1) for stepping up and/or down an output voltage of the first power supply (S1);
o a first switching means (4) connected to said first transformer (T1) for driving said first transformer (T1);
o a first controlling means with power factor correction (3) connected to said first switching means (4) for controlling the switching operation of the switching means (4);
- at least one second power supply (S2) comprising;
∘ a second transformer (T2) for stepping up and/or down output voltage of the second power supply (S2);
∘ a second switching means (6) connected to said second transformer (T2) for driving said second transformer (T2);
∘ a second controlling means (5') connected to said second switching means (6) for controlling the switching operation of the switching means (4);
**characterized in that** the second controlling means are without power factor correction and **in that** said power supply system further comprises;
- At least one auxiliary winding (T1a) on the first transformer (T1) for generating a higher voltage than an input voltage of a power input of the power supply system;
- A first rectification means (8a) connected between the power input of the power supply system and a power input of the second power supply (S2), allowing a first current to only pass from the power input of the power supply system to the power input of the second power supply (S2) and
- A second rectification means (8b) connected between an output of the auxiliary winding (T1a) and the power input of the second power supply (S2), allowing current to pass only from the output of the auxiliary winding (T1 a) to the power input of the second power supply (S2)
wherein,
the second rectification means (8b) is configured to supply the second power supply (S2) from the auxiliary winding (T1a) when the first power supply (S1) is in operation; and the first rectification means (8a) is configured to supply the second power supply (S2) from the power input of the power supply system when the first power supply (S1) is not in operation.

2. A switching power supply system according to claim 1 **characterized in that** it further comprises an input filtering means (1) for filtering an input current of the switching power supply system.

3. A switching power supply system according to claim 1 **characterized in that** it further comprises an input rectification means (2) for rectifying the input current of the system.

## Patentansprüche

1. **Schaltnetzteil-System** mit
- einem ersten Netzteil (S1) mit
- einem ersten Transformator (T1) zum Erhöhen und/oder Senken einer Ausgangsspannung des ersten Netzteils (S1);
- einer ersten Schalteinrichtung (4), die mit dem ersten Transformator (T1) verbunden ist, zum Treiben oder Ansteuern des ersten Transformators (T1);
- einer ersten Steuereinrichtung mit Leistungsfaktor- oder Blindleistungskompensation (3), die mit der ersten Schalteinrichtung (4) verbunden ist, zum Steuern des Schaltbetriebs der Schalteinrichtung (4);
- zumindest einem zweiten Netzteil (S2) mit
- einem zweiten Transformator (T2) zum Erhöhen und/oder Senken einer Ausgangsspannung des zweiten Netzteils (S2);
- einer zweiten Schalteinrichtung (6), die mit dem zweiten Transformator (T2) verbunden ist, zum Treiben oder Ansteuern des zweiten Transformators (T2);
- einer zweiten Steuereinrichtung (5'), die mit der zweiten Schalteinrichtung (6) verbunden ist, zum Steuern des Schaltbetriebs der Schalteinrichtung (4);
**dadurch gekennzeichnet, dass** die zweite Steuereinrichtung(en) keine Leistungsfaktorkompensation aufweist, und dadurch, dass das Netzteil
System weiter umfasst;
- zumindest eine Hilfswicklung (T1a) an dem ersten Transformator (T1) zum Erzeugen einer höheren Spannung als eine Eingangsspannung eines Leistungseingangs des Netzteil-Systems;
- eine erste Gleichrichtungseinrichtung (8a), die zwischen dem Leistungseingang des Netzteil-Systems und einem Leistungseingang des zweiten Netzteils (S2) verbunden ist, sodass ein erster Stromfluss nur von dem Leistungseingang des Netzteil-Systems zu dem Leistungseingang des zweiten Netzteils (S2) zugelassen ist; und
- eine zweite Gleichrichtungseinrichtung (8b), die zwischen einem Ausgang der Hilfswicklung (T1a) und dem Leistungseingang des zweiten Netzteils (S2) verbunden ist, sodass ein Stromfluss nur von dem Ausgang der Hilfswicklung (T1a) zu dem Leistungseingang des zweiten Netzteils (S2) zugelassen ist;
wobei die zweite Gleichrichtungseinrichtung (8b) so ausgestaltet ist, das
zweite Netzteil (S2) von der Hilfswicklung (T1a) zu versorgen, wenn das
erste Netzteil (S1) in Betrieb ist;
und die erste Gleichrichtungseinrichtung (8a) so ausgestaltet ist, das zweite Netzteil (S2) von dem Leistungseingang des Netzteil-Systems zu versorgen, wenn das erste Netzteil (S1) nicht in Betrieb ist.

2. Schaltnetzteil-System nach Anspruch 1, **dadurch gekennzeichnet, dass** es weiter umfasst: eine Eingangs-Filtereinrichtung (1) zum Filtern eines Eingangsstroms des SchaltnetzteilSystems.

3. Schaltnetzteil-System nach Anspruch 1, **dadurch gekennzeichnet, dass** es weiter umfasst: eine Eingangsgleichrichtungseinrichtung (2) zum Gleichrichten des oder eines Eingangsstroms des Systems.

## Revendications

1. Système d'alimentation électrique à commutation comprenant :
- une première alimentation électrique (S1) comprenant :
- un premier transformateur (T1) pour élever et/ou abaisser une tension de sortie de la première alimentation électrique (S1) ;
- un premier moyen de commutation (4) connecté audit premier transformateur (T1) pour diriger ledit premier transformateur (T1) ;
- un premier moyen de commande avec correction de facteur de puissance (3) connecté audit premier moyen de commutation (4) pour commander l'opération de commutation du moyen de commutation (4) ;
- au moins une deuxième alimentation électrique (S2) comprenant :
- un deuxième transformateur (T2) pour élever et/ou abaisser une tension de sortie de la deuxième alimentation électrique (S2) ;
- un deuxième moyen de commutation (6) connecté audit deuxième transformateur (T2) pour diriger ledit deuxième transformateur (T2) ;
- un deuxième moyen de commande (5') connecté audit deuxième moyen de commutation (6) pour commander l'opération de commutation du moyen de commutation (4) ;
**caractérisé en ce que** le deuxième moyen de commande est sans correction de facteur de puissance et **en ce que** ledit système d'alimentation électrique comprend en outre :
- au moins un enroulement auxiliaire (T1a) sur le premier transformateur (T1) pour générer une tension supérieure à une tension d'entrée d'une entrée d'alimentation du système d'alimentation électrique ;
- un premier moyen de redressement (8a) connecté entre l'entrée d'alimentation du système d'alimentation électrique et une entrée d'alimentation de la deuxième alimentation électrique (S2), permettant à un premier courant de passer seulement de l'entrée d'alimentation du système d'alimentation électrique vers l'entrée d'alimentation de la deuxième alimentation électrique (S2) et
- un deuxième moyen de redressement (8b) connecté entre une sortie de l'enroulement auxiliaire (T1a) et l'entrée d'alimentation de la deuxième alimentation électrique (S2), permettant à un courant de passer seulement de la sortie de l'enroulement auxiliaire (T1a) vers l'entrée d'alimentation de la deuxième alimentation électrique (S2)
dans lequel
le deuxième moyen de redressement (8b) est configuré pour alimenter la deuxième alimentation électrique (S2) à partir de l'enroulement auxiliaire (T1a) quand la première alimentation électrique (S1) est en fonctionnement ; et le premier moyen de redressement (8a) est configuré pour alimenter la deuxième alimentation électrique (S2) à partir de l'entrée d'alimentation du système d'alimentation électrique quand la première alimentation électrique (S1) n'est pas en fonctionnement.

2. Système d'alimentation électrique à commutation selon la revendication 1, **caractérisé en ce qu'**il comprend en outre un moyen de filtrage d'entrée (1) pour filtrer un courant d'entrée du système d'alimentation électrique à commutation.

3. Système d'alimentation électrique à commutation selon la revendication 1, **caractérisé en ce qu'**il comprend en outre un moyen de redressement d'entrée (2) pour redresser le courant d'entrée du système.
